Europäisches Patentamt

European Patent Office

Office européen des brevets

(11) Veröffentlichungsnummer: **0 048 963**
**A2**

(12) **EUROPÄISCHE PATENTANMELDUNG**

(21) Anmeldenummer: **81107608.2**

(22) Anmeldetag: **24.09.81**

(51) Int. Cl.³: **F 24 J 3/02**

(30) Priorität: **26.09.80 DE 3036275**

(43) Veröffentlichungstag der Anmeldung: **07.04.82**
**Patentblatt 82/14**

(84) Benannte Vertragsstaaten: **AT BE CH DE FR GB IT LI LU NL SE**

(71) Anmelder: **AL-KO POLAR Maschinenfabrik GmbH, D-8876 Jettingen-Scheppach (DE)**

(72) Erfinder: **Pfaudler, Reinhold, Innerer Krautgarten 13, D-8871 Burtenbach (DE)**

(74) Vertreter: **Munk, Ludwig, Dipl.-Ing., Prinzregentenstrasse 1, D-8900 Augsburg (DE)**

(54) **Vorrichtung zur Aufnahme von Umgebungswärme.**

(57) Bei einer Vorrichtung zur Speisung einer Wärmepumpe (3) mit Niedertemperatur-Primärenergie mit einem an einen Wärmeträgerkreislauf angeschlossenen Wärmetauscher (4), der an seiner Aussenoberfläche Wärme aufnimmt und an seiner Innenoberfläche abgibt, wird dadurch eine besonders einfache Bauweise bei sauberem Aussehen und gutem Wirkungsgrad erreicht, dass der Wärmetauscher (4) nach Art eines insbesondere für Regen und Wind zugänglich angeordneten, an sich bekannten, Gliederradiators aus Stahl aufgebaut ist, dessen Aussenoberfläche mit einer Korrosionsschutzschicht versehen ist.

## Vorrichtung zur Aufnahme von Umgebungswärme

Die Erfindung betrifft eine Vorrichtung zur Speisung einer Wärmepumpe mit Niedertemperatur-Primärenergie, mit einem an einen Wärmeträgerkreislauf angeschlossenen Wärmetauscher, der an seiner Außenoberfläche Wärme aufnimmt und an seiner Innenoberfläche abgibt.

Bei bekannten Anordnungen dieser Art besteht der Wärmetauscher vielfach aus Kunststoffschlauch- bzw. -rohrleitungen, die an jeweils ein gemeinsames Verteiler- bzw. Sammelrohr angeschlossen sind. Die Praxis hat gezeigt, daß Anordnungen dieser Art nicht nur sehr aufwendig sowohl in der Herstellung als auch in der Montage sind, sondern gleichzeitig auch insbesondere im Hinblick auf die bei niedrigen Temperaturen sich zeigende Versprödung von Kunststoff eine hohe Störanfälligkeit aufweisen. Außerdem ist der Flächenbedarf bei Anordnungen dieser Art verhältnismäßig hoch, was sich negativ auf das äußere Aussehen auswirken kann und daher vielfach insbesondere bei einer Anbringung in oder an einem Gebäude als Verschandelung empfunden wird. Ein weiterer Nachteil der bekannten Anordnungen ist darin zu sehen, daß sich hierbei ein verhältnismäßig hoher innerer Strömungswiderstand ergibt, so daß verhältnismäßig stark dimensionierte Umwälzpumpen erforderlich sind, um das Wärmeträgermedium zu bewegen, was sich negativ auf die Wärmewirtschaftlichkeit auswirkt.

Man hat sich auch schon mit Anordnungen beholfen, bei denen mehrere, durch Kunststoffsäcke oder feine Bleche mit aufgesetzten Rohrleitungen gebildete Lamellen hintereinander bzw. übereinander angeordnet sind. Mit Anordnungen dieser Art konnte zwar der Flächenbedarf reduziert werden, die übrigen Nachteile oben geschilderter Art sind jedoch in gleicher Weise oder noch verstärktem Maße vorhanden. Ganz abgesehen davon benötigen die bekannten Anordnungen zur Aufnahme und Abstützung der ihrerseits keine ausreichende Tragfähigkeit aufweisenden Lamellen geeignete Traggerüste, was sich negativ auf den Herstellungsaufwand und die Standardisierung auswirkt. Außerdem sind Anordnungen dieser Art gegen Stöße bzw. stoßartige Erschütterungen sehr anfällig. Ein weiterer Nachteil ist darin zu sehen, daß sich infolge der verhältnismäßig engen Staffelung der Lamellen vielfach eine nur unzureichende Spülung der Lamellenoberflächen und damit eine schlechte Wärmeaufnahme ergibt.

Hiervon ausgehend ist es daher die Aufgabe der vorliegenden Erfindung, eine Vorrichtung eingangs erwähnter Art auf einfache und kostengünstige Weise so zu verbessern, daß nicht nur eine einfache Herstellung und leichte Montage, sondern gleichzeitig auch ein vergleichsweise sauberes und kompaktes Aussehen sowie eine hohe Unempfindlichkeit gewährleistet sind, und daß dennoch ein ausgezeichneter Wärmewirkungsgrad und damit insgesamt eine ausgezeichnete Wärme-

Wirtschaftlichkeit erreicht werden.

Die Lösung dieser Aufgabe gelingt in überraschend einfacher Weise dadurch, daß der Wärmetauscher nach Art eines insbesondere für Regen und Wind zugänglich angeordneten, an sich bekannten Gliederradiators aus Stahl aufgebaut ist, dessen Außenoberfläche mit einer Korrosionsschutzschicht versehen ist.

Gliederradiatoren aus Stahl stellen einen genormten Massenartikel dar, der bereits heute schon in sehr hohen Stückzahlen hergestellt und daher vergleichsweise billig angeboten werden kann. Die erfindungsgemäße Verwendung eines solchen Gliederradiators als Ausgangsprodukt für die Bildung eines Wärmetauschers zur Aufnahme von Umgebungswärme ermöglicht daher in vorteilhafter Weise nicht nur den Einsatz genormter und gleichzeitig billiger Serienbauteile, was sich positiv auf die Herstellungskosten und die Qualität auswirkt, sondern erschließt für einen bisher bereits ausgereiften Artikel ein völlig neues Anwendungsgebiet, was eine weitere Steigerung der Massenproduktion und damit eine weitere Verbilligung erwarten läßt. Die an sich bekannten Radiatoren aus Stahl stellen zudem in vorteilhafter Weise robuste Bauteile dar, die gegen Stöße und stoßartige Erschütterungen sowie gegen Temperaturschwankungen im hier in Frage stehenden Bereich völlig unempfindlich sind, was sich positiv auf die Störanfälligkeit auswirkt und eine hohe Lebensdauer gewährleistet. Gleichzeitig gewährleistet der erfindungsgemäße Wärmetauscher dennoch eine vergleichsweise große wirksame Oberfläche sowie eine gute Oberflächenspülung und stellt daher eine hohe Wärmeaufnahme durch Konvektion und

4

Strahlung sicher. Die äußere Korrosionsschutzschicht ermöglicht in vorteilhafter Weise eine Außenaufstellung, so daß der Standort in vorteilhafter Weise beliebig gewählt werden kann. Durch die Verwendung eines Radiators als Wärmetauscher ist ferner ein vergleichsweise geringer innerer Strömungswiderstand sichergestellt, so daß man in vorteilhafter Weise mit einer leichten Umwälzpumpe auskommt. Ein weiterer Vorteil der erfindungsgemäßen Maßnahmen ist darin zu sehen, daß der hier verwendete Radiator ein selbsttragendes Bauteil darstellt, so daß Traggerüste und dergleichen in vorteilhafter Weise nicht erforderlich sind. Die Verwendung eines Radiators mit verschweißten Gliedern bietet in vorteilhafter Weise zudem die Möglichkeit einer weitgehenden industriellen Vormontage, so daß praktisch komplett vormontierte Einheiten auf Lager gehalten und angeboten werden können, was sich vorteilhaft auf den erforderlichen Montageaufwand und damit die Gestehungskosten auswirken kann. Zudem noch stellt ein Radiator ein vergleichsweise wartungsfreies Bauteil dar, was durch die erfindungsgemäße Korrosionsschutzschicht noch besonders verbessert wird. Darüberhinaus bieten die erfindungsgemäßen Maßnahmen die Möglichkeit einer formschönen und nicht störenden Gestaltung sowie einer individuellen Farbgebung in einem passenden Farbton. Die mit der Erfindung erzielbaren Vorteile sind demnach insbesondere in einer ausgezeichneten Wirtschaftlichkeit zu sehen.

In vorteilhafter Weiterbildung der übergeordneten Maßnahmen kann die Außenoberfläche des als Wärmetauscher verwendeten Gliederradiators feuerverzinkt und mit einem Anstrich versehen sein. Die Feuerverzinkung ergibt einen besonders zuverlässigen Korrosionsschutz und bildet eine ausgezeichnete Haftgrundlage für den Anstrich, der etwa zur Bildung der Absorberfläche dienen kann.

Eine weitere zweckmäßige Maßnahme kann darin bestehen, daß der als Wärmetauscher verwendete Gliederradiator mit mindestens einem Haken bzw. einer Öse versehen ist. Diese Maßnahme erleichtert in vorteilhafter Weise die Manipulation mittels eines Krans und gewährleistet somit eine einfache Handhabung bei Transport und Montage bzw. Aufstellung.

In vorteilhafter Weise kann der als Wärmetauscher verwendete Gliederradiator jeweils mehrere aus einer Anzahl dicht miteinander verschweißter Glieder bestehende Gliedergruppen aufweisen, die strömungsmäßig miteinander verbunden sind. Diese Maßnahme erleichtert in vorteilhafter Weise die Lagerhaltung und ermöglicht dennoch eine individuelle Anpassung an den tatsächlichen Bedarf. Es genügt hierbei in vorteilhafter Weise, wenn lediglich einige Größen auf Lager gehalten werden, die dann entsprechend kombiniert werden können. Die einzelnen Gliedergruppen können strömungsmäßig parallel oder in besonders vorteilhafter Weise zur Bewerkstelligung eines langen Strömungswegs hintereinander geschaltet sein.

Zur Erzeugung eines Zwangsdurchlaufs unter Erfassung sämtlicher Glieder und Vermeidung von toten Winkeln oder dergleichen kann es zweckmäßig sein, wenn die einzelnen, strömungsmäßig hintereinander geschalteten Gruppen in jeweils unterschiedlicher Richtung durchströmt werden.

Eine für viele Anwendungsfälle besonders zweckmäßige Ausführungsform kann darin bestehen, daß die einzelnen Gliedergruppen reihenmäßig nebeneinander angeordnet und vorzugsweise lösbar miteinander verbunden sind. Eine derartige Ausführung gestattet in vorteilhafter Weise eine linienförmige Anpassung des erfindungsgemäßen Wärmetauschers an bauliche Gegebenheiten und ermöglicht so auf einfache Weise die Bildung von Brüstungen bzw. Begrenzungen. Vorteilhaft kann der Radiator hierbei zur Bildung veines Stoßschutzes durch eine Ablageleiste abgedeckt sein.

Gemäß einer anderen, ganz besonders zu bevorzugenden Ausgestaltung der übergeordneten Maßnahmen kann der Wärmetauscher aus jeweils zweizeilig hintereinander angeordneten, strömungsmäßig miteinander verbundenen Gliedergruppen bestehen. Diese Maßnahme ergibt in vorteilhafter Weise einen Kompaktblock, der frei aufstellbar und dennoch für Reinigungszwecke gut zugänglich ist. Auf Grund der Selbsttrageigenschaften eines Radiators kann dieser Block in vorteilhafter Weise rahmenlos ausgebildet sein, was die Freizügigkeit bei der Bestimmung der Größe erhöht und die Montage und Aufstellung vereinfacht. Zur Bewerkstelligung einer vielfach erwünschten Bodenfreiheit kann der rahmenlose Block einfach auf einer mit Füßen versehenen Absetzpalette aufgenommen sein.

Weitere zweckmäßige Fortbildungen und vorteilhafte Ausgestaltungen der übergeordneten Maßnahmen ergeben sich aus der nachstehenden Beschreibung einiger Ausführungsbeispiele anhand der Zeichnung in Verbindung mit den restlichen Unteransprüchen.

7

In der Zeichnung zeigen:

Fig. 1    eine bivalente Heizungsanlage mit einer Wärmepumpe und einem an einer Außenwand montierten Wärmetauscher zur Aufnahme von
Primärenergie,

Fig. 2    eine Ausführungsform des erfindungsgemäßen
Wärmetauschers in Form einer Terrassenbrüstung,

Fig. 3    eine Ausführungsform des erfindungsgemäßen
Wärmetauschers in Form eines freistehend
aufstellbaren Kompaktblocks und

Fig. 4    ein Anwendungsbeispiel mit einem auf einem
Flachdach angeordneten Kompaktblock.

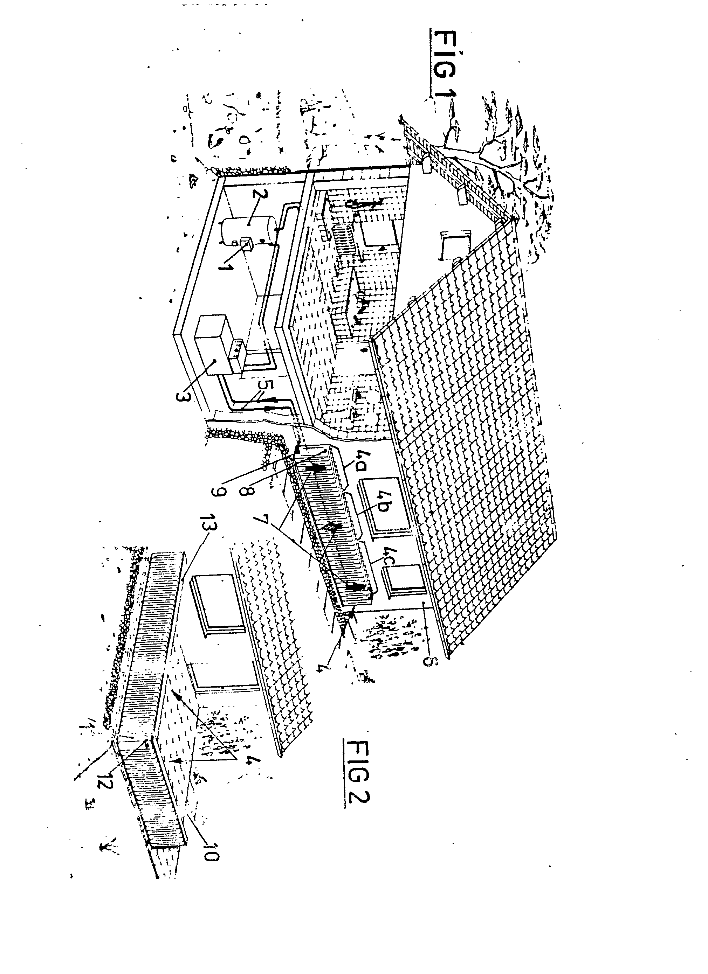

Die in Figur 1 dargestellte bivalente Heizungsanlage
besteht aus einem konventionellen, durch einen Brenner 1 befeuerten Heizkessel 2, dem eine Wärmepumpe 3,
hier in Form einer Flüssigkeitswärmepumpe, vorgeordnet ist, die mit mittels eines Wärmetauschers 4 aus
der Umgebung entnommener Niedertemperatur-Wärme versorgt wird. Die Temperaturen der hier benötigten Wärme liegen zwischen - 10 bis + 20$^{\circ}$C. Die Wärmepumpe 3
und der Wärmetauscher 4 sind durch eine Ringleitung
5 miteinander verbunden, in welcher eine hier nicht
näher dargestellte Umwälzpumpe angeordnet ist. Als
Wärmeträgermedium, mittels dessen die Wärme vom Wärmetauscher zur Wärmepumpe transportiert wird, soll
eine Sohle aus mit einem Frostschutzmittel versetztem Wasser Verwendung finden. Der Aufbau und die Funktionsweise einer bivalenten Heizungsanlage und einer Flüssigkeitswärmepumpe sind an sich bekannt und bedürfen daher keiner näheren Erläuterung mehr.

Der der Wärmepumpe 3 zugeordnete Wärmetauscher 4 zur Aufnahme von Primärenergie ist nach Art eines Gliederradiators aus Stahl aufgebaut, der aus mehreren dicht miteinander verschweißten Gliedern besteht. Es ist daher in vorteilhafter Weise möglich, einfach einen handelsüblichen Gliederradiator zu verwenden, dessen Oberfläche auf einfache Weise durch einen entsprechenden Anstrich zusätzlich als Absorberfläche ausgebildet werden kann. Zur Bewerkstelligung eines ausreichenden Korrosionsschutzes kann die Außenoberfläche des verwendeten Gliederradiators zunächst vorzugsweise durch Feuerverzinken mit einer Korrosionsschutzschicht versehen werden, auf die dann der zur Bildung einer Absorberfläche erforderliche Anstrich aufgebracht wird. Hierbei kann vorteilhaft praktisch jede Art von Farbe gewählt werden, was eine individuelle Anpassung an die Verhältnisse des Einzelfalls ermöglicht. Es ist lediglich darauf zu achten, daß der Anstrich vorzugsweise dunkel sein soll. Die Verwendung eines Gliederradiators bietet der den Wärmetauscher umströmenden Luft in vorteilhafter Weise große Angriffsflächen und ermöglich dennoch ein leichtes Entweichen der während des Abkühlvorgangs nach unten sinkenden Luft, so daß eine ausgezeichnete Spülung des erfindungsgemäßen Wärmetauschers 4 erzielt wird. Gleichzeitig ermöglicht der als Gliederradiator ausgebildete Wärmetauscher 4 die Aufnahme eines hohen Strahlungsanteils.

Bei dem in Figur 1 dargestellten Ausführungsbeispiel ist der Wärmetauscher 4 an der Außenwand 6 eines Gebäudes befestigt. Hierfür können nicht näher dargestellte Konsolen Verwendung finden. Eine Anbringung dieser Art ist von Innenheizkörpern her an sich bekannt. Die einzelnen Glieder des den Wärmetauscher 4 bildenden Gliederradiators sind hier zweckmäßig einzeilig nebeneinander angeordnet. Es wäre durchaus denkbar, sämtliche Glieder des gesamten Wärmetauschers 4 im Bereich ihrer gegenseitigen Stoßstellen zu einem einteiligen Bauteil zu verschweißen. Bei dem in Figur 1 dargestellten Ausführungsbeispiel soll der Wärmetauscher 4 aus mehreren nebeneinander angeordneten Gliedergruppen 4a bzw. 4b bzw. 4c bestehen, die miteinander verschraubt und strömungsmäßig miteinander verbunden sind. Die einzelnen Gliedergruppen 4 a bzw. 4b bzw. 4c können dabei im Bereich ihrer gegenseitigen Stoßstelle in an sich bekannter Weise jeweils so miteinander verschraubt sein, daß die Schraubverbindung von außen nicht erkennbar ist. Hierzu werden im Bereich der stoßstellenseitigen Nabenbohrungen Gewindebüchsen angebracht, die mit Hilfe eines zwei unterschiedliche Gewindeabschnitte aufweisenden Gewindebolzens zusammengezogen werden. Die einzelnen Gliedergruppen können dabei zweckmäßig strömungsmäßig hintereinander geschaltet sein. Im dargestellten Ausführungsbeispiel sollen die drei Gliedergruppen 4a, 4b, 4c so strömungsmäßig hintereinander geschaltet sein, daß die Strömungsrichtung zwischen den einzelnen Gliedergruppen wechselt, d. h. daß die eine Gliedergruppe von unten nach oben und die jeweils darauffolgende Gliedergruppe in umgekehrter Richtung durchströmt wird, wozu jeweils abwechselnd der untere bzw. der obere Überlauf zwischen zwei aufeinander folgenden Gliedergruppen gesperrt ist. Hierzu kann einfach ein aus Vollmaterial bestehender Gewindebolzen Verwendung finden. Zur Bewerkstelligung der gewünschten strömungsmäßigen Verbindung kann der im Bereich derselben Stoßstelle jeweils gegenüberliegende Gewindebolzen einfach mit einer Durchgangsbohrung versehen sein. In Figur 1 sind die Strömungsrichtungen innerhalb der einzelnen Gliedergruppen 4a, 4b, 4c durch die Pfeile 7 angedeutet. Die erste Gliedergruppe 4a wird demnach von unten nach oben, die zweite Gliedergruppe 4b von oben nach unten dund die dritte Gliedergruppe 4c wiederum von unten nach oben durchströmt. Zwischen den Gliedergruppen 4a und 4b ist demnach der im Bereich der unteren Nabenbohrungen der einander benachbarten Glieder an sich mögliche Überlauf durch einen aus Vollmaterial bestehenden Gewindebolzen gesperrt, wogegen der im Bereich der oberen Nabenbohrungen vorgesehene Gewindebolzen zum Zusammenhalten der beiden Gliedergruppen mit einer Durchgangsbohrung versehen ist. Im Bereich der Gliedergruppen 4b und 4 c liegen genau umgekehrte Verhältnisse vor. Diese Richtungsumkehr zwischen den einzelnen Gliedergruppen gewährleistet in vorteilhafter Weise einen Zwangsdurchlauf, bei dem tote Ecken und damit weniger gut durchströmte Bereiche zuverlässig ausgeschaltet sind.

Die Verwendung einzelner Gliedergruppen macht in vorteilhafter Weise eine hohe Standardisierung möglich. Vielfach kommt man dabei bereits mit einer oder jedenfalls mit wenigen Gliedergruppengrößen aus, die zur Erzielung einer gewünschten Gesamtleistung in entsprechender Weise durch Aneinanderreihung kombiniert werden können. Bei dem in Figur 1 dargestellten Ausführungsbeispiel sind der Einfachheit halber drei jeweils gleich große Gliedergruppen vorgesehen. Es wäre jedoch auch ohne weiteres denkbar, zwei unterschiedliche Größen miteinander zu kombinieren, was sich insbesondere da als besonders vorteilhaft erweisen kann, wo es darum geht, etwa einen vorhandenen Platz zwischen zwei Fenstern oder dergleichen möglichst vollständig auszunutzen. Bei dem in Figur 1 dargestellten Ausführungsbeispiel sind die einzelnen Gliedergruppen 4a, 4b, 4c direkt aneinander angesetzt. Es wäre aber auch ohne weiteres denkbar, zwischen zwei aufeinander folgenden Gliedergruppen einen Abstand zu lassen, was sich insbesondere ebenfalls da als vorteilhaft erweisen kann, wo es darum geht, bauliche Gegebenheiten, wie etwa ein Fenster oder dergleichen, auszusparen. Die Verwendung von standardisierten Gliedergruppen führt in vorteilhafter Weise außerdem zu gewichtsmäßig noch verhältnismäßig einfach zu handhabenden Einheiten, was die Lagerhaltung, den Transport und die Montage erleichtern
kann. Zur Erleichterung der Handhabung kann jede
Gliedergruppe mit einem herstellungsseitig bereits
fest vorgesehenen, in Figur 1 nicht näher dargestellten Haken oder einer Öse zum Einhängen eines Tragseils
oder eines Kranhakens versehen sein.

Zum Entlüften des Wärmetauschers 4 zwecks Bewerkstelligung einer vollständigen Füllung kann ein Entlüftungsorgan an sich bekannter Art vorgesehen sein. Zur
Bewerkstelligung einer leichten Entleerbarkeit kann
ferner ein Entleerungsorgan, etwa in Form eines Absperrhahns vorgesehen sein. Der in Figur 1 dargestellte Wärmetauscher 4 soll im Bereich der freien oberen
Nabenbohrung 8 seines eingangsseitigen Glieds, an dessen untere Nabenbohrung 9 der Rücklaufast der Ringleitung 5 anschließt, mit dem hier nicht näher dargestellten Entlüftungsorgan und im Bereich der freien unteren
Nabenbohrung des ausgangsseitigen Glieds, an dessen
obere Nabenbohrung der Vorlaufast der Ringleitung 5
angeschlossen ist, mit dem hier ebenfalls nicht näher
dargestellten Entleerungsorgan versehen sein. Die von
der Wärmepumpe 3 zum Wärmetauscher 4 und zurückführende Ringleitung 5 kann zweckmäßig als Kunststoff-
Schlauchleitung ausgebildet sein, was in vorteilhafter Weise eine einfache Verlegbarkeit ergibt und gleichzeitig eine ausgezeichnete Verrottungssicherheit gewährleistet.

Die Verbindung mehrerer Gliedergruppen zu einer langen
Zeile ermöglicht in vorteilhafter Weise eine Verwendung des erfindungsgemäßen Wärmetauschers als Flächenbegrenzung, etwa in Form eines Zauns, einer Brüstung

13

oder dergleichen. Bei dem in Figur 2 dargestellten
Ausführungsbeispiel dient der hier ebenfalls als
Ganzes mit 4 bezeichnete Wärmetauscher als brüstungsartige Umrandung einer Gartenterrasse 10. Hierbei
sind zwei einzeilige Gliederreihen, die ihrerseits
wiederum aus einer oder mehreren Gliedergruppen bestehen können, rechtwinklig zueinander angeordnet.
Im Bereich der Eckverbindung ist eine Säule 11 vorgesehen. Ähnliche Säulen können auch im Bereich der
Brüstungsenden vorgesehen sein. Zur Bewerkstelligung
einer strömungsmäßigen Verbindung im Bereich der Ecksäule 11 kann ein die Ecksäule durchsetzender Rohrkrümmer 12 vorgesehen sein, der zweckmäßig durch einen Abschnitt eines Kunststoff-Schlauchs der für die
Ringleitung 5 verwendeten Art gebildet sein kann. Die
hier den Wärmetauscher 4 bildende, im Bereich der Ecksäule 11 abgewinkelte Gliederzeile kann einfach mit
den Gliederunterkanten direkt auf dem Untergrund aufgestellt sein. Im dargestellten Ausführungsbeispiel
sollen in gewissem Abstand in den Terrassenboden eingelassene Anker vorgesehen sein, auf denen der Wäremtauscher 4 mit leichtem Bodenabstand befestigt werden
kann. Zur Bildung eines sauberen oberen Abschlusses
ist eine durchgehende Ablageleiste 13 vorgesehen, die
einfach durch in bestimmten Abständen vorgesehene Klemmen an den Gliedern des Wärmetauschers 4 festlegbar ist.
Eine ähnliche Ablageleiste könnte auch bei dem in Figur 1 dargestellten Ausführungsbeispiel vorgesehen sein.

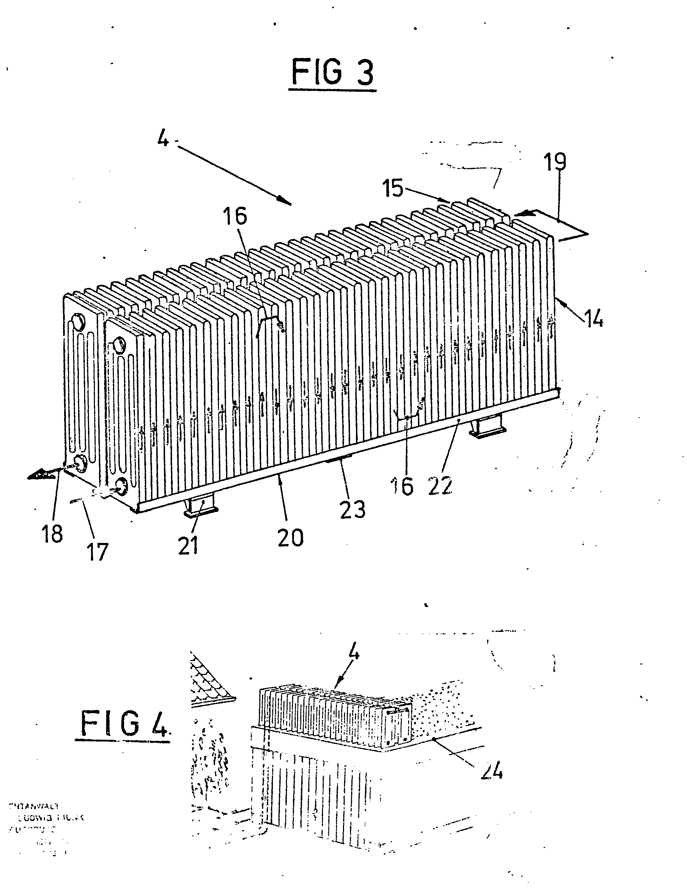

Der in Figur 3 dargestellte, als Ganzes ebenfalls mit
4 bezeichnete Wärmetauscher ist als freistehender
Block ausgebildet, der aus zwei hintereinander angeordneten Gliederzeilen 14 bzw. 15 besteht. Diese Glie-

derzeilen 14 bzw. 15 können ihrerseits wiederum in mehrere, hier direkt miteinander verschraubte Gliedergruppen der in Figur 1 bei 4a bzw. 4b bzw. 4c angedeuteten Art unterteilt sein, wobei die Durchfluß-. richtung zwischen aufeinanderfolgenden Gliedergruppen zur Bewerkstelligung eines Zwangsdurchlaufs auch bei hoher Gliederzahl wechseln kann, wie in Figur 3 durch die auf unterschiedlicher Höhe angeordneten, durch die Pfeile 16 verdeutlichten Überläufe zwischen aufeinanderfolgenden Gliedergruppen angedeutet ist. Die beiden einen Block bildenden Gliederzeilen 14 und 15 können parallel durchströmt sein. Im dargestellten Ausführungsbeispiel wird der gesamte den Wärmetauscher 4 bildende Block in Serie durchströmt, d. h. die Gliederzeilen 14 und 15 sind strömungsmäßig hintereinander geschaltet. Der Eingang 17 und der Ausgang 18, zum Anschluß der Ringleitung 5 können sich daher in vorteilhafter Weise nebeneinander befinden, was die Verlegung der Ringleitung 5 nicht unwesentlich erleichtern kann. Im dargestellten Ausführungsbeispiel soll der Blockein- bzw. -ausgang 17 bzw. 18 über die jeweils untere Nabenbohrung der im Bereich einer Blockstirnseite einander benachbarten Glieder der beiden Gliederreihen 14 bzw. 15 erfolgen. Der Überlauf von der Gliederzeile 14 zur Gliederzeile 15 erfolgt im Bereich der gegenüberliegenden Blockstirnseite und läßt sich einfach durch einen vereinfacht dargestellten Rohrkrümmer 19 bewerkstelligen, der hier die einander benachbarten oberen Nabenbohrungen miteinander verbindet. Die Entlüftung kann bei einem derartigen Block zweckmäßig im Bereich der ein- und ausgangsseitigen Stirnseite, die Entleerung im Bereich der jeweils gegenüberliegenden Stirnseite erfolgen, wo freie obere bzw. untere Nabenbohrungen zur Verfügung stehen.

Die Gliederzeilen 14 bzw. 15 bilden selbsttragende Einheiten, was in vorteilhafter Weise eine rahmenlose Aufstellung des den Wärmetauscher 4 bildenden Blocks ermöglicht. Die beiden Gliederzeilen können dabei einfach im Bereich ihrer Stirnseiten durch Scheren oder dergleichen zusammengehalten werden. Im dargestellten Ausführungsbeispiel dient hierzu einfach der Rohrkrümmer 19. Infolge der eigenen Tragfähigkeit und Standsicherheit kann der den Wärmetauscher 4 bildende Block direkt auf dem Untergrund abgesetzt werden. Im dargestellten Ausführungsbeispiel ist der den Wärmetauscher 4 bildende Block zur Bewerkstelligung einer leichten Bodenfreiheit der einzelnen Glieder auf einer als Ganzes mit 20 bezeichneten Palette abgesetzt, die mit Füßen 21 versehen ist. Die Palette 20 besteht im dargestellten Ausführungsbeispiel einfach aus zwei parallel angeordneten Winkelschienen 22, die durch eine Anzahl von Quertraversen 23 miteinander verbunden sind. Die Anzahl der Füße 21 richtet sich nach dem jeweils aufzunehmenden Gewicht. Im dargestellten Ausführungsbeispiel sollen vier Füße vorgesehen sein.

Ein Block der in Figur 3 dargestellten Art kann frei in einem Garten oder auf einem Flachdach oder dergleichen aufgestellt werden. Bei dem in Figur 4 dargestellten Ausführungsbeispiel ist ein derartiger Wärmetauscher 4 brüstungsartig auf dem Flachdach 24 einer Garage angeordnet. Bei dem der Figur 4 zugrunde liegenden Anwendungsfall soll ein über die gesamte Garagenbreite sich erstreckender Block mit zwei parallelen Gliederzeilen ausreichen. Es wäre aber auch ohne weiteres denkbar, bei größerem Bedarf mehrere Blöcke mit Abstand nebeneinander anzuordnen und mit der Ringleitung 5 zu verbinden.

Patentansprüche

1. Vorrichtung zur Speisung einer Wärmepumpe (3) mit Niedertemperatur-Primärenergie mit einem an einen Wärmeträgerkreislauf angeschlossenen Wärmetauscher (4), der an seiner Außenoberfläche Wärme aufnimmt und an seiner Innenoberfläche abgibt, dadurch gekennzeichnet, daß der Wärmetauscher (4) nach Art eines insbesondere für Regen und Wind zugänglich angeordneten, an sich bekannten, Gliederradiators aus Stahl aufgebaut ist, dessen Außenoberfläche mit einer Korrosionsschutzschicht versehen ist.

2. Vorrichtung nach Anspruch 1, dadurch gekennzeichnet, daß die Außenoberfläche des als Wärmetauscher (4) verwendeten Gliederradiators feuerverzinkt und mit einem Anstrich versehen ist.

3. Vorrichtung nach einem der vorhergehenden Ansprüche 1 und 2, dadurch gekennzeichnet, daß als Wärmetauscher (4) verwendete Gliederradiator jeweils mindestens ein Entlüftungs- und Entleerungsorgan aufweist, die vorzugsweise jeweils im Bereich freier oberer oder unterer Nabenbohrungen (8 bzw. 9) angeordnet sind.

4. Vorrichtung nach einem der vorhergehenden Ansprüche 1 bis 3, dadurch gekennzeichnet, daß der als Wärmetauscher (4) verwendete Gliederradiator mit mindestens einem Kranhaken bzw. einer Öse versehen ist.

5. Vorrichtung nach einem der vorhergehenden Ansprüche 1 bis 4, dadurch gekennzeichnet, daß der als Wärmetauscher (4) verwendete Gliederradiator mehrere, aus mehreren, dicht miteinander verschweißten Gliedern bestehende Gliedergruppen (4a, 4b, 4c) aufweist, die vorzugsweise strömungsmäßig hintereinander angeordnet sind, wobei die Strömungsrichtung vorzugsweise zwischen den einzelnen Gliedergruppen wechselt.

6. Vorrichtung nach einem der vorhergehenden Ansprüche 1 bis 5, dadurch gekennzeichnet, daß die Gliedergruppen (4a, 4b, 4c) eines Wärmetauschers (4) reihenmäßig nebeneinander angeordnet und vorzugsweise lösbar miteinander verbunden sind.

7. Vorrichtung nach Anspruch 6, dadurch gekennzeichnet, daß die reihenmäßig nebeneinander angeordneten Gliedergruppen (4a, 4b, 4c) durch Konsolen an einer Wand (6) aufgehängt sind.

8. Vorrichtung nach Anspruch 6 oder 7, dadurch gekennzeichnet, daß die reihenmäßig hintereinander angeordneten Gliedergruppen (4a, 4b, 4c) als Ausfachung einer Flächenbegrenzung ausgebildet und vorzugsweise durch eine Ablageleiste (13) überdeckt sind.

3

9. Vorrichtung nach einem der Ansprüche 1 bis 8, <u>dadurch gekennzeichnet, daß</u> der Wärmetauscher (4) aus jeweils zweizeilig hintereinander angeordneten, strömungsmäßig miteinander verbundenen Gliedergruppen besteht und vorzugsweise als freistehender, rahmenloser Block ausgebildet ist, der vorzugsweise auf einer mit Füßen (21) versehenen Absetzpalette (20) aufgenommen ist.

10. Vorrichtung nach Anspruch 9, <u>dadurch gekennzeichnet, daß</u> der Eingang (17) und der Ausgang (18) des den Wärmetauscher (4) bildenden Blocks im Bereich einer Blockstirnseite nebeneinander angeordnet sind.

FIG 1

FIG 2

0048963

2/2

# FIG 3

# FIG 4